# EUROPEAN PATENT APPLICATION

(11) **EP 4 737 230 A1**
(43) Date of publication of application: **06.05.2026**
(21) Application number: 25460045.5
(22) Date of filing: 28.10.2025
(51) Int. Cl.: B60S 13/00

(54) **TRANSPORT SYSTEM**

(30) Priority: 30.10.2024 PL 45016724
(71) Applicant: WISS SAMOCHODY SPECJALNE SPÓLKA Z OGRANICZONA ODPOWIEDZIALNOSCIA, 43-300 Bielsko-Biala (PL)
(72) Inventor: Kluczny, Robert, 43-512 Bestwinka (PL); Kosiewicz, Piotr, 43-346 Bielsko-Biala (PL); Kaleta, Konrad, 43-300 Bielsko-Biala (PL)
(74) Representative: Rygiel, Andrzej

(57) **Abstract**

The subject of the invention is a transport system applicable on a configurable assembly line of special-purpose vehicles as a means of transportation of special-purpose vehicles chassis on an assembly line, intended in particular for assembly lines of differentiated rescue vehicles.

The transport system for a special-purpose vehicles assembly line according to the invention is characterised by that it consists of a ramp (1) coupled for the duration of a vehicle (27) or (28) approach with a bogie truck (2) with the use of mechanical locks (29) and of a configurable pulled truck (3) not connected with it, whereby the bogie truck (2) has a chassis (4) equipped on the inside with pneumatic cushions (6) and batteries (26) to power two drive units (9) consisting of dual-action motors (12) connected with gears (11) driving drive wheels (10), and measuring wheels (13), and it has two sets of adjustable wheels (18) of which one set (14) is steered with a gear (15) with a motor (16) coupled with an encoder (17), and the other set of wheels (18) is caster wheels, whereas the pulled truck (3) is equipped with four sets of caster wheels (24) and replaceable adapters (25) to install chassis (27) of vehicles, whereby the chassis (4) is equipped with an external charging and powering system with a socket (5), a main switch (21), an emergency stop (22), warning lights (20) and sensors (23) detecting obstacles.

## Description

The subject of the invention is a transport system applicable on a configurable assembly line of special-purpose vehicles as a means of transportation of special-purpose vehicles chassis on an assembly line, intended in particular for assembly lines of differentiated rescue vehicles.

So far, numerous solutions of high bearing capacity transport systems applicable in assembly lines, production processes and bulky materials transportation have been developed. The currently used transport systems optimised as regards heavy goods vehicles production are characterised by low flexibility and inability to be quickly adapted to changing orders, and they often require a dedicated track.

The aim of the invention is to develop a configurable transport system which is applicable on an assembly line of differentiated special-purpose vehicles, rescue vehicles in particular, and which does not require preparation of a dedicated track.

The transport system for a special-purpose vehicles assembly line according to the invention is characterised by that it consists of a ramp coupled for the duration of a vehicle approach with a bogie truck with the use of mechanical locks and a configurable pulled truck not connected to it, whereby the bogie truck has a chassis equipped on the inside with pneumatic cushions and batteries to power two drive trains consisting of dual-action motors connected with gears driving drive wheels and measuring wheels, and has two sets of adjustable wheels, one set steered by the means of a gear with a motor coupled with an encoder, and the other set of wheels is caster wheels, whereas the pulled truck is equipped with four sets of caster wheels and replaceable adapters for installation of vehicles chassis, whereby the chassis is equipped with an external charging and powering system with a socket, a main switch, an emergency stop, warning lights and obstacles detection sensors. There are automatically folded-out supports located at two opposite sides of the chassis, whereby the support is located at the front, and the support at the back is connected to actuators. The chassis is equipped with platforms.

The advantage of the transport system being the subject of the invention which is applicable as a means of transport of chassis of special-purpose vehicles on an assembly line, intended in particular for rescue vehicles assembly lines, is low total and loading height, which allows for unimpeded assembly of components without special station platforms, as well as configurability of the trucks with the use of adapters and platforms, which makes it possible to adapt the transport system to different chassis used in production of special-purpose vehicles, including light two-axle chassis, heavy three-axle chassis and those of different types of drives and suspensions, as well as absence of connection between the trucks, which makes it possible to transport chassis of various lengths and wheelbases, as well as a wheel-type chassis which does not require a dedicated track.

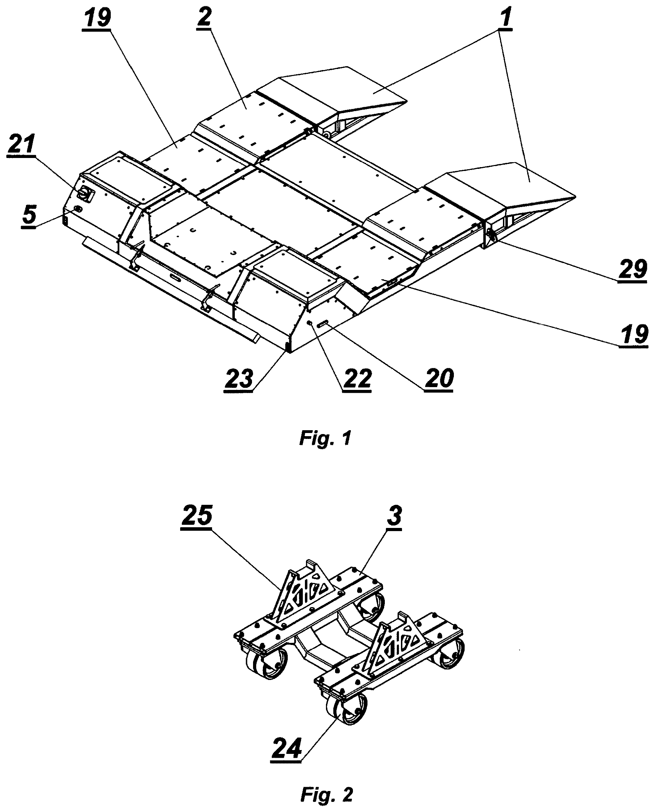

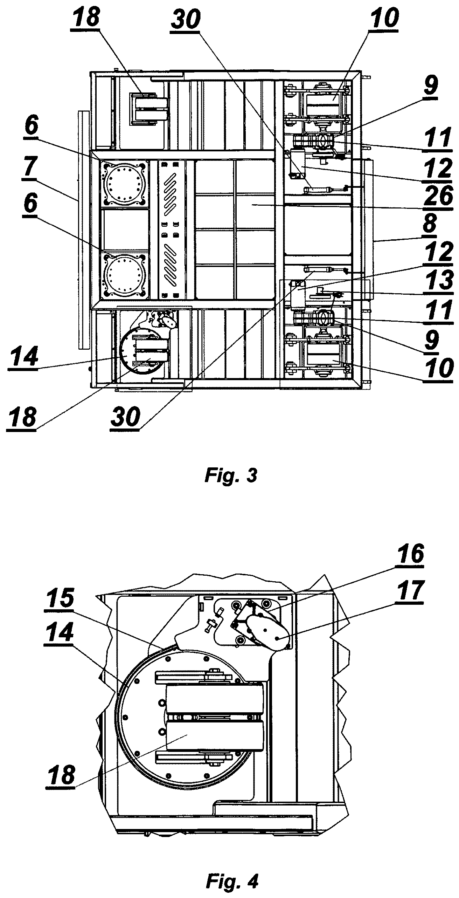

The subject of the invention is presented in embodiment on a drawing, where Fig. 1 presents in an axonometric view a transport system intended in particular for rescue vehicles assembly lines, Fig. 2 presents in an axonometric view a pulled truck, Fig. 3 presents in a bottom view a bogie truck, Fig. 4 presents in a bottom view a steered adjustable wheels set, Fig. 5 presents in a bottom view a drive train, Fig. 6 presents in a side view the bogie truck with platforms and ramps with two loading heights H1 and H2 marked, Fig. 7 presents in a side view the transport system with a chassis of a smaller clearance H3 at the start of works on an assembly line, Fig. 8 presents in a side view the transport system with a completed vehicle at the final stage of works on an assembly line, Fig. 9 presents schematically an example of the transport system route without presenting vehicles produced on an assembly line, and Fig. 10 presents schematically another an example of the transport system route without presenting vehicles produced on an assembly line.

As shown on the drawing, the transport system consists of ramps 1, a bogie truck 2 equipped with a chassis 4 and a configurable pulled truck 3. The ramps 1 are used during loading of the chassis onto the transport system and unloading of the complete vehicle at the end of the assembly line and they are coupled with the bogie truck 2 with the use of mechanical locks 29. The bogie truck 2 is equipped with an external power supply and loading system 5 which allows to power the bogie truck after batteries 26 have become empty as well as to charge them and fill pneumatic cushions 6 from an external source, the pneumatic cushions 6 lifting the bogie truck 2 before the vehicle is loaded or unloaded, a system of two supports 7 and 8 automatically folded-out with the use of pneumatic actuators 30, located at the front and at the back of the bogie truck 2 responsible for its immobilisation after it has been lifted on the pneumatic cushions 6, two drive units 9 responsible for the movement of the bogie truck 2 consisting of two drive wheels 10 of the capacity adjusted to heavy rescue vehicles, a gear 11, a dual-action motor 12 and a measuring wheel with an encoder 13 enabling calculation of the correction of the rotational speed of the drive wheels 10 during pivoting, which makes it possible to correct the movement trajectory, two sets of caster wheels 18 of the capacity adjusted to heavy rescue vehicles, of which one set 14 is steered with a gear 15 with a motor 16 coupled with an encoder 17. The steered set 14 allows for additional enforcement of the pivoting of the bogie truck 2, and the other set of caster wheels 18 follows the enforced movement trajectory, optional platforms 19 to adjust the truck to vehicles chassis 27 of a smaller clearance, warning lights 20 turned on during the movement of the bogie truck 2, a main switch 21 responsible for power supply cut-off, an emergency stop 22, constituting a safety element, and obstacle detection sensors 23 responsible for deactivation of the drive in case a collision risk is detected. The pulled truck 3 is equipped with four sets of caster wheels 24 of the capacity adjusted to heavy rescue vehicles and following the movement trajectory enforced by the bogie truck 2, and replaceable adapters 25 to install chassis adjusted to particular suspensions.

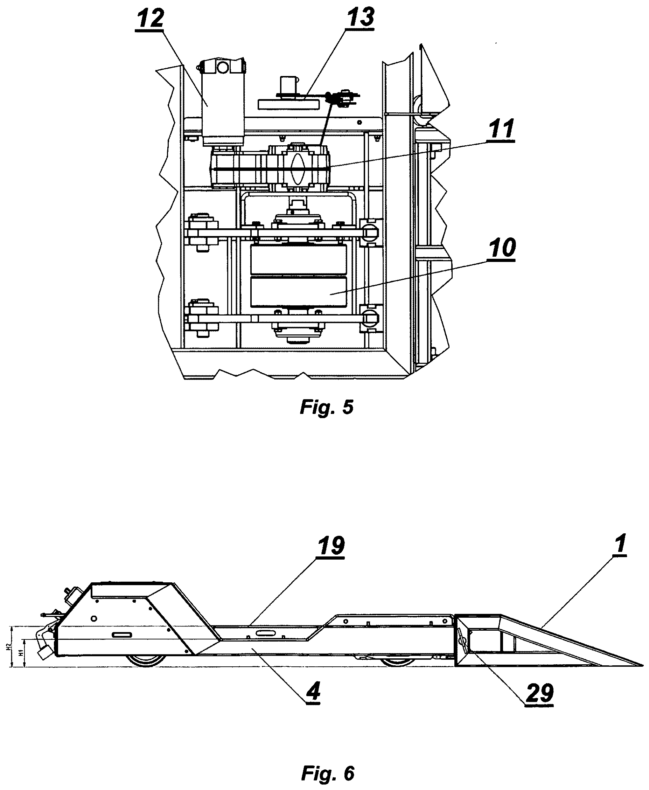

As shown in Fig. 6, the bogie truck 2 equipped with the chassis 4 which constitutes a part of the transport system can be adjusted to transport vehicles 27 of a smaller clearance owing to the application of the optional platforms 19 increasing the loading height from H1 to H2.

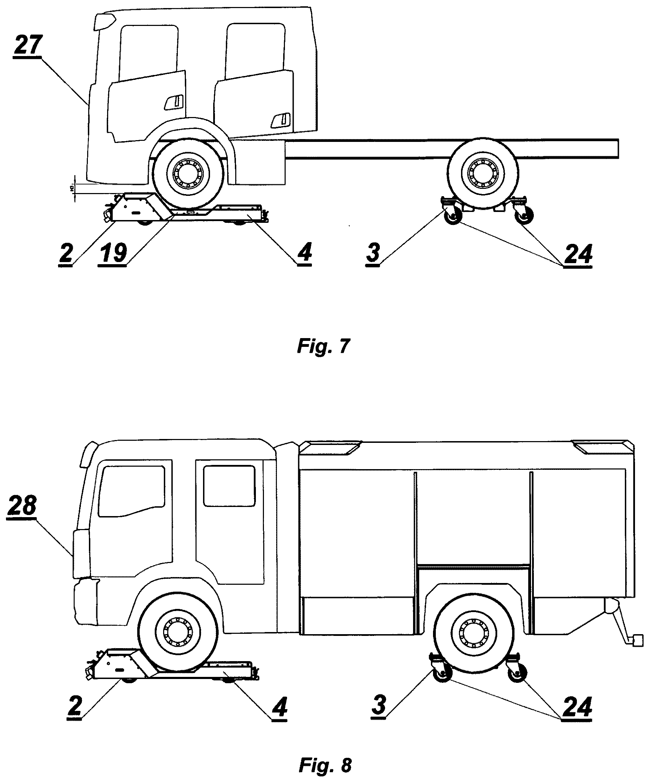

As shown in Fig. 7, the transport system during operation makes it possible to transport the vehicles 27 of a smaller clearance owing to the application of the optional platforms 19 increasing the loading height from H1 to H2 and the distance between the bumper of a vehicle and the construction of the pulled truck 3.

As shown in Fig. 8, the transport system during operation makes it possible to transport vehicles 28 constructed on an assembly line.

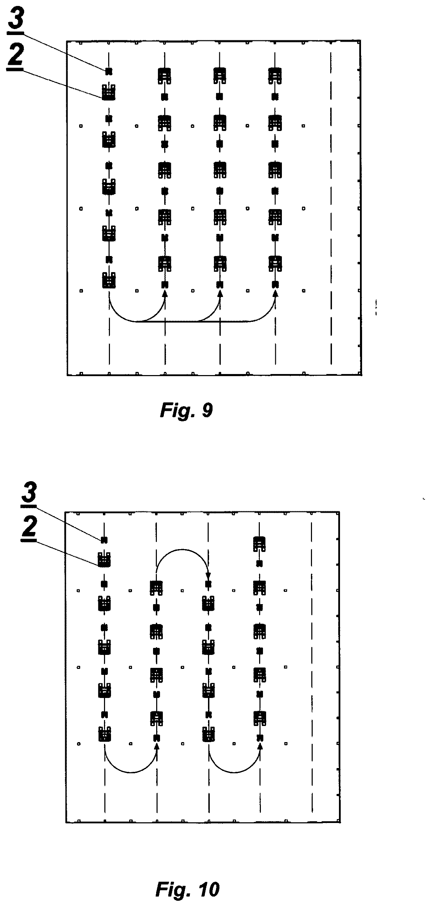

As shown in Fig. 9 and Fig. 10, the transport system makes it possible to plan different routes of the assembly line depending on work intensity of the assembly process. Fig. 9 presents a configuration of the assembly line in which from one run of the assembly line three other runs differing in produced vehicles and work intensity are supplied. Fig. 10 presents a configuration of the assembly line in which the transport system moves along all runs of the assembly line during a vehicle production.

## Claims

1. A transport system for a special purpose vehicles assembly line **characterised by** that it consists of a ramp (1) coupled for the time of a vehicle (27) or (28) approach with a bogie truck (2) with the use of mechanical locks (29) and of a configurable pulled truck (3) not connected to it, whereby the bogie truck (2) has a chassis (4) equipped on the inside with pneumatic cushions (6) and batteries (26) to power two drive units (9) consisting of dual-action motors (12) conneced with gears (11) driving drive wheels (10) and measuring wheels (13) and it has two sets of adjustable wheels (18) from which one set (14) is steered with a gear (15) with a motor (16) coupled with an encoder (17), and the other set of wheels (18) is caster wheels, whereas the pulled truck (3) is equipped with four sets of caster wheels (24) and replaceable adapters (25) to install chassis (27) of the vehicles, whereby the chassis (4) is equipped with an external charging and powering system with a socket (5), a main switch (21), an emergency stop (22), warning lights (20) and sensors (23) detecting obstacles.

2. The system according to claim 1, **characterised by** that at two opposite sides of the chassis (4) there are located automatically folded-out supports (7), (8), whereby the support (7) is located at the front, and the support (8) at the back is connected with actuators (30).

3. The system according to claim 1, **characterised by** that the chassis (4) is equipped with platforms (19).
